# EUROPEAN PATENT SPECIFICATION

(11) **EP 3 791 636 B1**
(45) Date of publication and mention of the grant of the patent: **01.07.2026**
(21) Application number: 18729843.5
(22) Date of filing: 08.05.2018
(51) Int. Cl.: H04W 52/02, H04W 88/06

(54) **LEARNING FUNCTION FOR IOT DEVICE TRANSMISSION TIMING**
LERNFUNKTION ZUR SENDEZEITTAKTUNG EINER IOT-VORRICHTUNG
FONCTION D'APPRENTISSAGE POUR SYNCHRONISER UNE TRANSMISSION D'UN DISPOSITIF IOT

(43) Date of publication of application: 17.03.2021
(73) Proprietor: Sony Network Communications Europe B.V., 2132LS Hoofddorp (NL)
(72) Inventor: LJUNG, Rickard, 221 88 Lund (SE); PETEF, Andrej, 221 88 Lund (SE); ISBERG, Anders, 221 88 Lund (SE); KARLSSON, Peter, 221 88 Lund (SE); MAZLOUM, Nafiseh, 221 88 Lund (SE); EXNER, Peter, 221 88 Lund (SE)
(74) Representative: Neij & Lindberg AB
(86) International application number: PCT/US2018/031480
(87) International publication number: WO 2019/216880

(56) References cited:
- US-A1- 2013 045 744
- US-A1- 2017 347 313

## Description

### TECHNICAL FIELD OF THE INVENTION

The technology of the present disclosure relates generally to portable electronic devices and the transmission of data over a wireless communication network and more particularly to portable electronic devices and methods for selectively adjusting the time of data transmissions to optimize cost.

### DESCRIPTION OF THE RELATED ART

The Internet of Things (IoT) is a network of interconnected computing devices embedded with software, sensors, actuators, or other electronics enabling them to collect and exchange data with each other or a server over a wireless communication network. Data transmission capability has become increasingly popular for portable electronic devices, such as mobile telephones and smartphones, tablet computers, cellular-connected laptop computers and similar devices. For example, many of these devices may include sensors that are configured to collect information, optionally process and/or temporarily store the information, and transmit parts or all of that information over wireless communication systems via a wireless modem to a network server for further processing and/or communication to other devices. These devices typically rely on a power source, such as a battery within the device, for energy to accomplish such transmission. With each wireless transmission of data, energy is consumed from the power source.

Longer battery life, therefore, is desirable for these devices. Longer battery life may be achieved, for example, by increasing battery size. However, increasing battery size inevitably increases the overall size of the device and, relatedly, makes the device more expensive. Accordingly, an alternative solution for longer battery life and energy conservation for portable electronic devices is desired.

US2017/347313A1 discloses techniques for estimating baseband power consumption and using the baseband power consumption estimation to select baseband operation features. According to some embodiments, one or more baseband power consumption modifiers occurring during an estimation window may be identified. Baseband power consumption of the wireless device during the estimation window may be estimated based on the identified baseband power consumption modifiers occurring during the estimation window. Baseband data throughput of the wireless device during the estimation window may also be estimated. One or more baseband operation characteristics may be selected based at least in part on the estimated baseband power consumption during the estimation window, possibly in conjunction with the estimated baseband data throughput during the estimation window, current wireless medium conditions, and/or other considerations.

US2013/045744A1 discloses an electronic device with wireless communications circuitry that supports communications using multiple radio access technologies. The electronic device may gather information such as data rate values, power consumption values, and other data for a currently active radio access technology and an alternative radio access technology. The electronic device may automatically switch between the currently active radio access technology and the alternative radio access technology based on a value of a data rate efficiency metric. The data rate efficiency metric may represent how efficiently each radio access technology is capable of using power to convey a given amount of data per unit time. The data rate efficiency metric may be evaluated using measured power consumption data, measured data rate values, and operating parameters such as signal strength and transmitted power parameters.

### SUMMARY

The invention is defined by the claims.

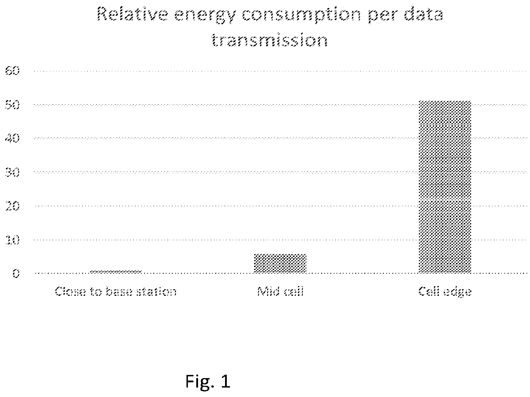

An alternative concept for increasing the battery life of portable electronic devices interacting in the IoT involves recognizing the cost (e.g., energy consumption) required to transmit data in various wireless communication network conditions present at the time of data transmission. The energy consumed for one data transmission may vary significantly depending on these conditions. Various parameters influencing the network conditions may include the location and mobility of the device, the indoor or outdoor position of the device, cell load aspects (e.g., time of day variations), urban or rural network topology, or the location of the data transmitter such as, for example, a wireless modem within the cell. For example, it has been found that the location of the wireless modem relative to the base station will impact both the required time to transmit a given amount of data and the required energy consumed from the battery. Figure 1 illustrates an example of the relative difference in energy consumption for data transmission between three different positions of a wireless modem within a cell.

A learning function may be implemented within a portable electronic device to optimize a specific cost parameter (e.g., energy consumption) within the device by ensuring that data transmissions occur at times when the device experiences the most cost-effective conditions. The present disclosure achieves this by obtaining and mapping with the learning function various conditions sensed by the device with associated data transmission costs at times when those sensed conditions occur. Using the learning function, the device may adjust the timing of data transmissions based on associated estimated transmission costs.

Accordingly, in one aspect of the invention a portable electronic device is provided. The portable electronic device comprises at least one sensor configured to sense at least one sensor data, including at least one first sensor data representing a first sensed condition. The portable electronic device also comprises a processor configured to create a learned sensor data pattern based on the at least one sensor data and create a learning function including a cost correlation map. The processor is also configured to obtain the at least one first sensor data representing a first sensed condition, estimate using the learning function a first estimated transmission cost associated with an upcoming data transmission under the first sensed condition.

In one embodiment, the processor is configured to predict using the learned sensor data pattern at least one upcoming second sensor data representing a predicted second sensed condition, and estimate using the learning function a second estimated transmission cost associated with the upcoming data transmission under the predicted second sensed condition. The processor is also configured to compare the first estimated transmission cost with the second estimated transmission cost.

In one embodiment, the portable electronic device further comprises a wireless modem configured to perform one or more data transmissions, wherein at least one data unit is transmitted in each of the one or more data transmissions and wherein the sensor is configured to sense at least one reference sensor data during each of the one or more data transmissions.

In another embodiment, to create the learning function, the processor is further configured to obtain the at least one reference sensor data of each of the one or more data transmissions, measure a reference data transmission cost associated with the performance of each of the one or more data transmissions, and create the cost correlation map in which the at least one reference sensor data obtained in each of the one or more data transmissions is correlated with the associated reference transmission cost.

In yet another embodiment, when the first estimated transmission cost is less than or equal to the second estimated transmission cost, the processor is further configured to activate the wireless modem to perform the upcoming data transmission at a time when the first sensed condition occurs.

In another embodiment, when the second estimated transmission cost is less than the first estimated transmission cost, the processor is further configured to activate the wireless modem to perform the upcoming data transmission at a time when the predicted second sensed condition occurs.

In another embodiment, when the first estimated transmission cost is less than or equal to the second estimated transmission cost, the processor is further configured to compare the first estimated transmission cost to a predetermined maximum cost, and activate the wireless modem to perform the upcoming data transmission at a time when the first sensed condition occurs and when the first estimated transmission cost is less than or equal to the predetermined maximum cost.

In another embodiment, when the second estimated transmission cost is less than the first estimated transmission cost, the processor is further configured to compare the second estimated transmission cost to a predetermined maximum cost, and activate the wireless modem to perform the upcoming data transmission at a time when the predicted second sensed condition occurs and when the second estimated transmission cost is less than or equal to the predetermined maximum cost.

In another embodiment, when the first estimated transmission cost is less than or equal to the second estimated transmission cost, the processor is further configured to identify a predetermined maximum data amount to be transmitted at the first estimated transmission cost, and activate the wireless modem to perform the upcoming data transmission at a time when the first sensed condition occurs by transmitting an amount less than or equal to the predetermined maximum data amount to be transmitted at the first estimated transmission cost.

In another embodiment, when the second estimated transmission cost is less than the first estimated transmission cost, the processor is further configured to identify a predetermined maximum data amount to be transmitted at the second estimated transmission cost, and activate the wireless modem to perform the upcoming data transmission at a time when the predicted second sensed condition occurs by transmitting an amount less than or equal to the predetermined maximum data amount to be transmitted at the second estimated transmission cost.

In another aspect of the invention a method is provided. The method comprises obtaining at least one sensor data and, based on the at least one sensor data, creating a learned sensor data pattern. The method also comprises creating a learning function including a cost correlation map. The method also comprises obtaining at least one first sensor data representing a first sensed condition, estimating using the learning function a first estimated transmission cost associated with an upcoming data transmission under the first sensed condition.

In one embodiment, the method comprises predicting using the learned sensor data pattern at least one upcoming second sensor data representing a predicted second sensed condition and estimating using the learning function a second estimated transmission cost associated with the upcoming data transmission under the predicted second sensed condition. The method also comprises comparing the first estimated transmission cost with the second estimated transmission cost.

In one embodiment, creating the learning function comprises performing one or more data transmissions, each data transmission comprising transmitting at least one data unit, obtaining at least one reference sensor data, and measuring a reference data transmission cost associated with the performance of the data transmission. Creating the learning function also comprises creating the cost correlation map in which the at least one reference sensor data obtained in each data transmission is correlated with the associated reference transmission cost.

In yet another embodiment, wherein the first estimated transmission cost is less than or equal to the second estimated transmission cost, the method further comprises performing the upcoming data transmission at a time when the first sensed condition occurs.

In another embodiment, wherein the second estimated transmission cost is less than the first estimated transmission cost, the method further comprises performing the upcoming data transmission at a time when the predicted second sensed condition occurs.

In another embodiment, wherein the first estimated transmission cost is less than or equal to the second estimated transmission cost, the method further comprises comparing the first estimated transmission cost to a predetermined maximum cost, and performing the upcoming data transmission at a time when the first sensed condition occurs and when the first estimated transmission cost is less than or equal to the predetermined maximum cost.

In another embodiment, wherein the second estimated transmission cost is less than the first estimated transmission cost, the method further comprises comparing the second estimated transmission cost to a predetermined maximum cost and performing the upcoming data transmission at a time when the predicted second sensed condition occurs and when the second estimated transmission cost is less than or equal to the predetermined maximum cost.

In another embodiment, wherein the first estimated transmission cost is less than or equal to the second estimated transmission cost, the method further comprises identifying a predetermined maximum data amount to be transmitted at the first estimated transmission cost, and performing the upcoming data transmission at a time when the first sensed condition occurs by transmitting an amount less than or equal to the predetermined maximum data amount to be transmitted at the first estimated transmission cost.

In another embodiment, wherein the second estimated transmission cost is less than the first estimated transmission cost, the method further comprises identifying a predetermined maximum data amount to be transmitted at the second estimated transmission cost, and performing the upcoming data transmission at a time when the predicted second sensed condition occurs by transmitting an amount less than or equal to the predetermined maximum data amount to be transmitted at the second estimated transmission cost.

In another embodiment, estimating a first estimated transmission cost includes matching the at least one first sensor data with at least one of the at least one reference sensor data in the cost correlation map, and identifying the reference transmission cost correlated to the at least one matched reference sensor data.

In another embodiment, estimating at least one second estimated transmission cost includes matching the at least one upcoming second sensor data with at least one of the at least one reference sensor data in the cost correlation map, and identifying the reference transmission cost correlated to the at least one matched reference sensor data.

These and further features will be apparent with reference to the following description and attached drawings. In the description and drawings, particular embodiments have been disclosed in detail as being indicative of some of the ways in which principles of the invention may be employed, but it is understood that the invention is not limited correspondingly in scope. Rather, the invention includes all changes, modifications and equivalents coming within the terms of the claims appended hereto.

Features that are described and/or illustrated with respect to one embodiment may be used in the same way or in a similar way in one or more other embodiments and/or in combination with or instead of the features of the other embodiments.

The terms "comprises" and "comprising," when used in this specification, are taken to specify the presence of stated features, integers, steps or components but do not preclude the presence or addition of one or more other features, integers, steps, components or groups thereof.

### BRIEF DESCRIPTION OF THE DRAWINGS

Figure 1 is a graph depicting relative energy consumption per data transmission.
Figure 2 is a schematic diagram of an exemplary portable electronic device according to an aspect of the invention.
Figure 3 is a flow diagram of an exemplary method according to an aspect of the invention.
Figure 4 is a flow diagram of a further embodiment of the method of Figure 3.
Figure 5 is a flow diagram of a further embodiment of the method of Figure 3.
Figure 6 is a flow diagram of a further embodiment of the method of Figure 3.
Figure 7 is a schematic diagram of an exemplary portable electronic device according to an aspect of the invention.

### DETAILED DESCRIPTION OF EMBODIMENTS

Embodiments of the present invention will now be described with reference to the drawings, wherein like reference numerals are used to refer to like elements throughout. It will be understood that the figures are not necessarily to scale.

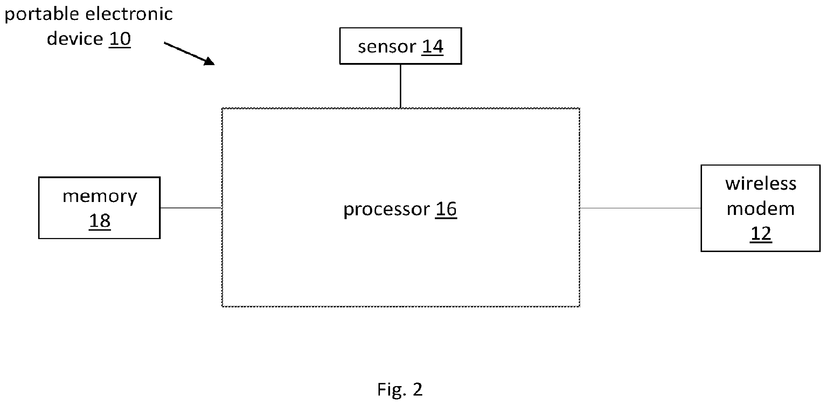

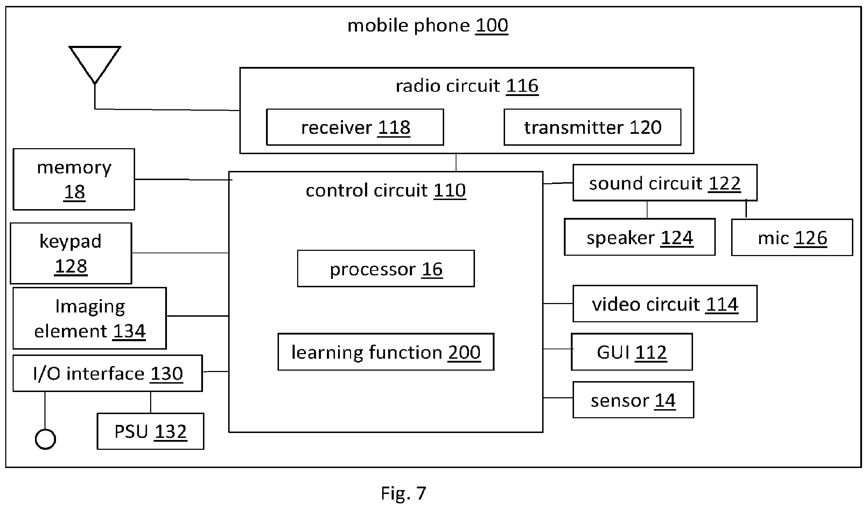

Figure 2 depicts a schematic block diagram of an exemplary portable electronic device 10. The portable electronic device 10 may be of any type, but for the examples used herein, the portable electronic device 10 may be a mobile smartphone. The device 10 includes at least one sensor 14, at least one wireless modem 12, a processor 16, and a memory 18. The device 10 may also include a plurality of other components, as will be described later with reference to Figure 7.

The sensor 14 may sense various types of data from various sources. At least some of this data may be transmitted over the wireless network by the wireless modem 12. The sensor 14 may be of any suitable type, depending on the source of data and data type to be sensed. For example, the sensor 14 may be of a type configured to sense data indicative of various conditions experienced by the device 10. Due to its mobile nature, the device 10 may experience various changing conditions over time. For example, the device 10 may experience changing GPS locations, surrounding temperatures, acceleration, speed, or direction. Accordingly, the sensor 14 may be of a type configured to sense GPS location data, acceleration, time, temperature, or any other data indicative of a sensed condition experienced by the device 10. The sensor 14 may also be of a type that senses the characteristics of the data being transmitted as different types of data may present different transmission conditions to the device 10.

The processor 16 may combine one or more data types into sets of data to be transmitted by the wireless modem 12. The processor 16 may activate the wireless modem 12 to perform data transmissions, in which at least one data unit is transmitted in each of the data transmissions. The processor 16 may activate the wireless modem 12 to perform a data transmission, for example, every minute or every hour. In the IoT, the wireless modem 12 may perform data transmissions in which data is transmitted from the device 10 to, for example, a server or another portable electronic device over a wireless communication network.

The processor 16 may obtain the data sensed by the sensor 14. The sensor 14 may sense sensor data representing a sensed condition that the device 10 is experiencing at the time of sensing. The sensor 14 may also sense reference sensor data during each of the data transmissions. In an embodiment, the sensor 14 may sense the reference sensor data simultaneously to the transmission of at least one data unit in each of the data transmissions. The reference sensor data represents a reference sensed condition that the device 10 is experiencing precisely at the time of the data transmission.

The processor 16 may save the sensor data in the memory 18. Based on the sensor data, the processor 16 is configured to create a learned sensor data pattern. As sensor data is obtained by the processor 16 and saved in the memory 18 over time, a historical record of sensor data may be created. This historical record may reveal certain sensor data patterns over time. For example, if the device 10 commonly takes a specific travel route, any GPS location sensor data that is obtained and saved in the memory 18 may characterize a pattern in which the specific route is learned. Another example may be if the device 10 experiences a common change in temperature over time, any temperature sensor data that is obtained and saved in the memory 18 may characterize a pattern of learned temperatures over time. The learned sensor data pattern may also involve different patterns that are dependent on the characteristics of the data being transmitted. The learned sensor data pattern, therefore, may represent a historical pattern of learned sensed conditions that can be used to predict upcoming sensed conditions. The processor 16 may then predict using the learned sensor data pattern an upcoming second sensor data representing a predicted second sensed condition that may likely occur at some point in the future, based on the historical record.

The processor 16 may obtain reference sensor data of each of the data transmissions. The processor 16 may also measure or calculate a reference data transmission cost associated with the performance of each of the data transmissions by the wireless modem 12. The reference data transmission cost may represent any parameter associated with the cost (e.g., energy consumption) for each data transmission. For example, the processor 16 may measure an amount of consumed energy from the battery, measured in mA or any other suitable metric. In another example, the processor 16 may measure the time required to complete the data transmission, as the time spent by the wireless modem 12 to complete a data transmission may also be indicative of energy consumption. In another example the processor 16 may measure the utilized transmission output power or another parameter indicative of the output power of the wireless modem transmitter, as the output power level may also be indicative of energy consumption.

Other parameters determining the aspect of cost could be envisioned as well, and the cost could be related to any type of parameter to optimize. In another example the data transmission cost could relate to the increase in device temperature due to the heat dissipation from processors, power amplifiers and other units activated during a transmission activity. Further in another example the data transmission cost could relate to the imposed monetary charges for data transmissions. It can be noted that the measurement or calculation of the associated cost of a data transmission may require sensor data or other input collected not only during a data transmission, but it may also include sensor data or other input collected during times before and/or after the actual data transmission activity.

The processor 16 may create a learning function including a cost correlation map in which a pattern of correlation between the reference sensor data and the associated reference data transmission cost is revealed. Each of the reference sensor data that is sensed at the time of each of the data transmissions may be mapped with each of the reference data transmission costs that are measured for the same data transmission. This way, each of the reference sensor data may be correlated to each of the reference data transmission cost associated with the same data transmission. Accordingly, the cost correlation map of the learning function may disclose different costs of transmitting at least one data unit under different sensed conditions. The learning function may be a multi-dimensional function describing the data transmission costs for different and multiple sensor data values. The learning function may use historical patterns of sensed conditions to predict upcoming data transmission costs. For example, the processor 16 may map the cost of transmitting at least one data unit of a particular data type with various sensed GPS locations and accelerometer data. Over time, correlations may be revealed in the cost correlation map of the learning function wherein, for example, certain locations and acceleration conditions typically involve a higher or lower transmission cost as compared to other locations and acceleration conditions.

The processor 16 may then estimate using the learning function a data transmission cost associated with the performance of an upcoming data transmission at a time when the device 10 is under any particular sensed condition. For example, as previously described, the processor 16 may obtain a first sensor data representing a first sensed condition present at the time of sensing. With the first sensor data, the processor 16 may estimate using the learning function a correlated first estimated transmission cost associated with the performance of the upcoming data transmission under the first sensed condition. The processor 16 may estimate the first estimated transmission cost by matching the first sensor data with a reference sensor data in the cost correlation map. The processor 16 may then identify in the cost correlation map the reference transmission cost correlated to the reference sensor data that has been matched to the first sensor data.

In addition, as previously described, the processor 16 may predict using the learned sensor data pattern at least one upcoming second sensor data representing a predicted second sensed condition likely to occur at some point in the future. With the upcoming second sensor data, the processor 16 may estimate, using the learning function, a correlated second estimated transmission cost associated with the performance of the upcoming data transmission under the predicted second sensed condition at some point in the future. The processor 16 may estimate the second estimated transmission cost by matching the upcoming second sensor data with a reference sensor data in the cost correlation map. The processor 16 may then identify as the second estimated transmission cost the reference transmission cost correlated to the reference sensor data matched to the upcoming second sensor data in the cost correlation map.

The processor 16 may then compare the first estimated transmission cost to the second estimated transmission cost and determine at what time (i.e., under which sensed condition) the performance of the upcoming data transmission would be most cost effective (i.e., lowest cost). In this way, the processor 16 may selectively activate the wireless modem 12 to either perform the upcoming data transmission at a time when the first sensed condition occurs or at an upcoming time when the predicted second sensed condition occurs.

In one embodiment, when the first estimated transmission cost is less than or equal to the second estimated transmission cost, the processor 16 may activate the wireless modem 12 to perform the upcoming data transmission at a time when the first sensed condition occurs. Alternatively, when the second estimated transmission cost is less than the first estimated transmission cost, the processor 16 may activate the wireless modem 12 to perform the upcoming data transmission later when the second sensed condition occurs. For example, when GPS location data, speed data, and direction data are correlated to data transmission costs in the learning function, and the processor 16 predicts using the learned sensor data pattern that a GPS location, speed and direction that correlates to a lower data transmission cost will occur at a later point in time, the processor 16 may postpone the upcoming data transmission until the GPS location, speed and direction correlated with the lower data transmission cost occurs.

In another embodiment, the learning function may be configured to set a predetermined maximum cost for the performance of any data transmission. The predetermined maximum cost may be set so that the processor 16 activates the wireless modem 12 to perform upcoming data transmissions only when the estimated transmission cost is less than or equal to the predetermined maximum cost. In this manner, the processor 16 may avoid activating the wireless modem 12 to perform the upcoming data transmission in scenarios that are very costly.

In this embodiment, when the first estimated transmission cost is less than or equal to the second estimated transmission cost, the processor 16 may compare the first estimated transmission cost to the predetermined maximum cost. The processor 16 may then activate the wireless modem 12 to perform the upcoming data transmission at a time when the first sensed condition occurs and when the first estimated transmission cost is less than or equal to the predetermined maximum cost. If the first estimated transmission cost is greater than the predetermined maximum cost, however, the processor 16 may postpone the upcoming data transmission until a time when a sensed condition that is correlated with an estimated transmission cost less than or equal to the predetermined maximum cost occurs.

When the second estimated transmission cost is less than the first estimated transmission cost, the processor 16 may compare the second estimated transmission cost to the predetermined maximum cost. The processor 16 may then activate the wireless modem to 12 to perform the upcoming data transmission at a time when the second sensed condition occurs and when the second estimated transmission cost is less than or equal to the predetermined maximum cost. If the second estimated transmission cost is greater than the predetermined maximum cost, however, the processor 16 may postpone the upcoming data transmission until a time when a sensed condition that is correlated with an estimated transmission cost less than or equal to the predetermined maximum cost occurs.

In yet another embodiment, the learning function may be configured to limit the amount of data to be transmitted at any given time based on the estimated transmission cost. For example, the learning function may set various predetermined maximum data amounts to be transmitted at various data transmission costs. The predetermined maximum data amounts may be set so that the processor 16 may adjust the amount of data that is transmitted at each data transmission cost to ensure that most data is transmitted when the device 10 experiences less costly conditions.

In this embodiment, when the first estimated transmission cost is less than or equal to the second estimated transmission cost, the processor 16 may identify the predetermined maximum data amount that has been set by the learning function for the first estimated transmission cost. The processor 16 may then activate the wireless modem 12 to perform the upcoming data transmission at a time when the first sensed condition occurs by transmitting an amount less than or equal to the predetermined maximum data amount to be transmitted at the first estimated transmission cost.

When the second estimated transmission cost is less than the first estimated transmission cost, the processor 16 may identify the predetermined maximum data amount that has been set by the learning function for the second estimated transmission cost. The processor 16 may then activate the wireless modem 12 to perform the upcoming data transmission at a time when the predicted second sensed condition occurs by transmitting an amount less than or equal to the predetermined maximum data amount to be transmitted at the second estimated transmission cost.

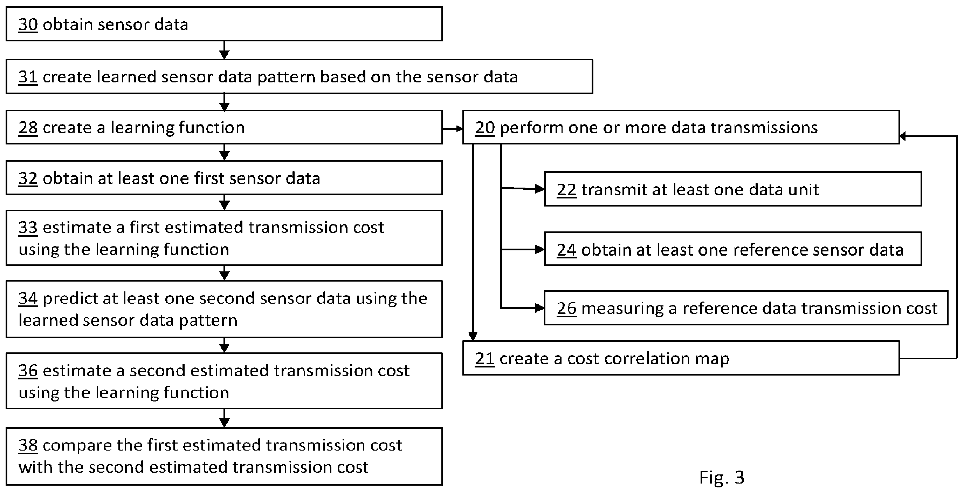

With reference to Figures 3-6 a method according to the present invention is depicted. With reference to Figure 3, the method comprises at 30, obtaining sensor data. At 31, the method includes creating a learned sensor data pattern based on the sensor data. The method further includes at 28 creating a learning function. Creating the learning function includes at 20, performing one or more data transmissions. Each data transmission may include transmitting at least one data unit at 22, obtaining at least one reference sensor data at 24, and measuring a reference data transmission cost associated with the performance of the data transmission at 26. The at least one reference sensor data may be obtained, at 24, simultaneously to the transmitting, at 22. Measuring the reference data transmission cost of each of the plurality of data transmissions may include measuring an amount of consumed energy from an energy source required to perform the data transmission. In another embodiment, measuring the reference data transmission cost may include measuring an amount of time spent performing the data transmission. Creating the learning function also includes at 21, creating a cost correlation map in which the at least one reference sensor data obtained in each data transmission is correlated with the reference transmission cost associated with the same data transmission. This process repeats; the process of improving the cost correlation map is a process that continues for the lifetime of the device 10.

At 32, the method includes obtaining at least one first sensor data representing a first sensed condition and at 33, estimating using the learning function a first estimated transmission cost associated with the performance of an upcoming data transmission under the first sensed condition. Estimating the first estimated transmission cost includes matching the at least one first sensor data with at least one of the at least one reference sensor data in the cost correlation map and identifying the reference transmission cost correlated to the at least one matched reference sensor data. The method also includes at 34, predicting using the learned sensor data pattern at least one upcoming second sensor data representing a predicted second sensed condition and at 36, estimating using the learning function a second estimated transmission cost associated with the performance of the upcoming data transmission under the predicted second sensed condition. Estimating the at least one second estimated transmission cost includes matching the at least one upcoming second sensor data with at least one of the at least one reference sensor data in the cost correlation map and identifying the reference transmission cost correlated to the at least one matched reference sensor data. The method further includes comparing the first estimated transmission cost with the second estimated transmission cost at 38.

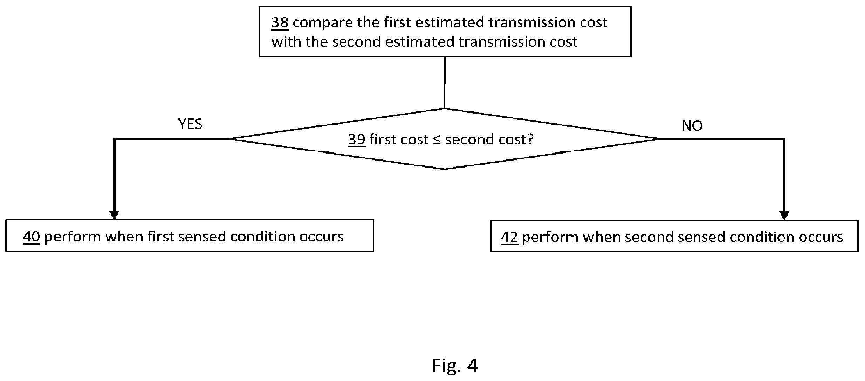

The method may be used to adjust the timing of upcoming data transmissions so that they are more cost effective. Accordingly, with reference to Figure 4, at 39, when the first estimated transmission cost is less than or equal to the second estimated transmission cost, the method further comprises, at 40, performing the upcoming data transmission at a time when the first sensed condition occurs. When, however, at 39, the second estimated transmission cost is less than the first estimated transmission cost, the method further comprises, at 42, performing the upcoming data transmission at a time when the predicted second sensed condition occurs.

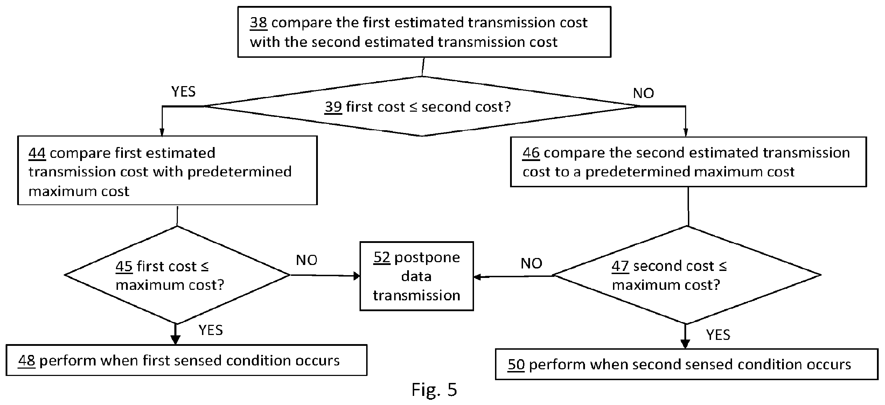

In one embodiment, with reference to Figure 5, the method may include comparing the estimated transmission costs to a predetermined maximum cost in order to avoid performing the upcoming data transmission under conditions that are too costly. Accordingly, when the first estimated transmission cost is less than or equal to the second estimated transmission cost at 39, the method further comprises, at 44, comparing the first estimated transmission cost to the predetermined maximum cost. At 39, when the second estimated transmission cost is less than the first estimated transmission cost, the method further comprises, at 46, comparing the second estimated transmission cost to the predetermined maximum cost. When the first estimated transmission cost is both less than or equal to the second estimated transmission cost and less than or equal to the predetermined maximum cost at 45, the method includes, at 48, performing the upcoming data transmission at a time when the first sensed condition occurs. When the second estimated transmission cost is both less than the first estimated transmission cost and less than or equal to the predetermined maximum cost at 47, the method includes, at 50, performing the upcoming data transmission at a time when the second sensed condition occurs. In either case, however, when the first or second estimated transmission cost is greater than the predetermined maximum cost upon comparison at 45 or 47, the method includes at 52 postponing the upcoming data transmission until a time when a sensed condition that correlates to an estimated transmission cost that is less than or equal to the predetermined maximum cost occurs.

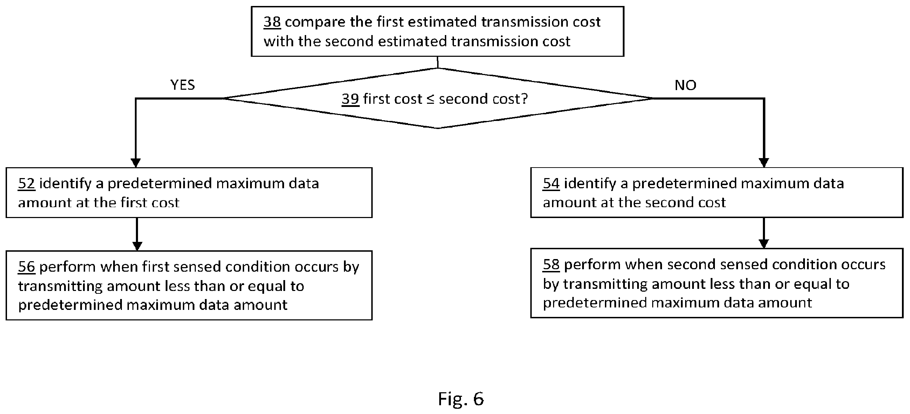

In another embodiment, with reference to Figure 6, the method may include identifying a predetermined maximum data amount to be transmitted at various transmission costs and adjusting the amount of data that is transmitted in the upcoming data transmission based on this predetermined maximum data amount. Accordingly, at 39 when the first estimated transmission cost is less than or equal to the second estimated transmission cost, the method further comprises, at 52, identifying a predetermined maximum data amount to be transmitted at the first estimated transmission cost and, at 56, performing the upcoming data transmission at a time when the first sensed condition occurs by transmitting an amount less than or equal to the predetermined maximum data amount to be transmitted at the first estimated transmission cost. When the second estimated transmission cost is less than the first estimated transmission cost at 39, the method further comprises, at 54, identifying a predetermined maximum data amount to be transmitted at the second estimated transmission cost and, at 58, performing the upcoming data transmission at a time when the second sensed condition occurs by transmitting an amount less than or equal to the predetermined maximum data amount to be transmitted at the second estimated transmission cost.

Figure 7 illustrates a detailed schematic block diagram of an exemplary portable electronic device 10, which in the illustrated embodiment is represented by a mobile phone 100. The phone 100 includes a control circuit 110 that is responsible for overall operation of the phone 100. For this purpose, the control circuit 110 includes the processor 16 that executes various applications, including applications related to or that form part of the phone 100 functioning as a portable electronic device 10 described above in reference to Figures 1-6.

In one embodiment, functionality of the phone 100 acting as the portable electronic device 10 described above in reference to Figures 1-7 are embodied in the form of executable logic (e.g., lines of code, software, or a program) that is stored in the memory 18, which may be a non-transitory computer readable medium of the phone 100 and is executed by the processor 16. The described operations may be thought of as a method that is carried out by the phone 100. Variations to the illustrated and described techniques are possible and, therefore, the disclosed embodiments should not be considered the only manner of carrying out phone 100 functions.

In one example, the phone 100 may include the processor 16, and the learning function 200, which may be implemented in the phone 100 as hardware, firmware, software, or combinations thereof and, thus, the phone 100 and its components provide means for performing functions described herein as performed by the processor 16 or the learning function 200.

The phone 100 further includes the GUI 112, which may be coupled to the processor 16 by a video circuit 114 that converts video data to a video signal used to drive the GUI 114. The video circuit 114 may include any appropriate buffers, decoders, video data processors and so forth.

The phone 100 further includes communications circuitry that enables the phone 100 to establish communication connections such as a telephone call. In the exemplary embodiment, the communications circuitry includes a radio circuit 116 such as the wireless modem 12. The radio circuit 116 includes one or more radio frequency transceivers including the receiver 118, the transmitter 120 and an antenna assembly (or assemblies). The phone 100 may be capable of communicating using more than one standard or radio access technology (RAT). Thus, the radio circuit 116 including the receiver 118 and the transmitter 120 represents each radio transceiver and antenna needed for the various supported connection types. The radio circuit 116 including the receiver 118 and the transmitter 120 further represents any radio transceivers and antennas used for local wireless communications directly with an electronic device, or over a Bluetooth interface.

As indicated, the phone 100 includes the primary control circuit 110 that is configured to carry out overall control of the functions and operations of the phone 100. The processor 16 of the control circuit 110 may be a central processing unit (CPU), microcontroller or microprocessor. The processor 16 executes code stored in a memory within the control circuit 110 and/or in a separate memory, such as the memory 18, in order to carry out operation of the phone 100. The memory 18 may be, for example, one or more of a buffer, a flash memory, a hard drive, a removable media, a volatile memory, a non-volatile memory, a random-access memory (RAM), or other suitable device. In a typical arrangement, the memory 18 includes a non-volatile memory for long term data storage and a volatile memory that functions as system memory for the control circuit 110. The memory 18 may exchange data with the control circuit 110 over a data bus. Accompanying control lines and an address bus between the memory 18 and the control circuit 110 also may be present. The memory 18 is considered a non-transitory computer readable medium.

The phone 100 may further include a sound circuit 122 for processing audio signals. Coupled to the sound circuit 122 are a speaker 124 and a microphone 126 that enable a user to listen and speak via the phone 100, and hear sounds generated in connection with other functions of the phone 100. The sound circuit 122 may include any appropriate buffers, encoders, decoders, amplifiers and so forth.

The phone 100 may further include a keypad 128 that provides for a variety of user input operations. The phone 100 may further include one or more input/output (I/O) interface(s) 130. The I/O interface(s) 130 may be in the form of typical electronic device I/O interfaces and may include one or more electrical connectors for operatively connecting the phone 100 to another device (e.g., a computer) or an accessory (e.g., a personal handsfree (PHF) device) via a cable. Further, operating power may be received over the I/O interface(s) 130 and power to charge a battery of a power supply unit (PSU) 132 within the phone 100 may be received over the I/O interface(s) 130. The PSU 132 may supply power to operate the phone 100 in the absence of an external power source.

The phone 100 also may include various other components. For instance, the imaging element 134 may be present for taking digital pictures and/or movies. Image and/or video files corresponding to the pictures and/or movies may be stored in the memory 18. As another example, various sensors 14 may be present to sense various sensor data as described with reference to Figure 2.

Although the invention has been shown and described with respect to certain preferred embodiments, it is understood that equivalents and modifications will occur to others skilled in the art upon the reading and understanding of the specification. The present invention includes all such equivalents and modifications and is limited only by the scope of the following claims.

## Claims

1. A portable electronic device (10) comprising:
at least one sensor (14) configured to sense sensor data, including at least one first sensor data representing a first sensed condition;
a processor (16) configured to:
create a learned sensor data pattern based on an historical record of sensing of the sensor data over time;
create a learning function including a cost correlation map in which reference sensor data obtained upon data transmission is correlated with an associated reference transmission cost representing energy consumption of the data transmission;
obtain the least one first sensor data representing a first sensed condition;
estimate, using the learning function for matching the at least one first sensor data with at least one of the reference sensor data in the cost correlation map, a first estimated transmission cost associated with an upcoming data transmission under the first sensed condition;
predict, using the learned sensor data pattern, at least one upcoming second sensor data representing a predicted second sensed condition based on the historical record;
estimate, using the learning function, a second estimated transmission cost associated with the upcoming data transmission under the predicted second sensed condition; and
compare the first estimated transmission cost with the second estimated transmission cost for selectively adjusting timing of the upcoming data transmission to optimize the energy consumption within the device based on the associated transmission cost.

2. The portable electronic device (10) of claim 1, wherein the portable electronic device (10) further comprises a wireless modem (12) configured to perform a plurality of data transmissions, wherein at least one data unit is transmitted in each of the data transmissions and wherein the sensor (14) is configured to sense at least one reference sensor data during each of the data transmissions.

3. The portable electronic device (10) of claim 2, wherein to create the learning function, the processor (16) is further configured to:
obtain the at least one reference sensor data of each of the data transmissions;
measure a reference data transmission cost associated with the performance of each of the data transmissions;
create the cost correlation map in which the at least one reference sensor data obtained in each of the data transmissions is correlated with the associated reference transmission cost.

4. The portable electronic device (10) of claim 2 or 3, wherein when the first estimated transmission cost is less than or equal to the second estimated transmission cost, the processor (16) is further configured to activate the wireless modem (12) to perform the upcoming data transmission at a time when the first sensed condition occurs.

5. The portable electronic device (10) of claim 2 or 3, wherein when the second estimated transmission cost is less than the first estimated transmission cost, the processor (16) is further configured to activate the wireless modem (12) to perform the upcoming data transmission at a time when the predicted second sensed condition occurs.

6. The portable electronic device (10) of claim 2 or 3, wherein when the first estimated transmission cost is less than or equal to the second estimated transmission cost, the processor (16) is further configured to:
compare the first estimated transmission cost to a predetermined maximum cost; and
activate the wireless modem (12) to perform the upcoming data transmission at a time when the first sensed condition occurs and when the first estimated transmission cost is less than or equal to the predetermined maximum cost.

7. The portable electronic device (10) of claim 2 or 3, wherein when the second estimated transmission cost is less than the first estimated transmission cost, the processor (16) is further configured to:
compare the second estimated transmission cost to a predetermined maximum cost; and
activate the wireless modem (12) to perform the upcoming data transmission at a time when the predicted second sensed condition occurs and when the second estimated transmission cost is less than or equal to the predetermined maximum cost.

8. The portable electronic device (10) of claim 2 or 3, wherein when the first estimated transmission cost is less than or equal to the second estimated transmission cost, the processor (16) is further configured to:
identify a predetermined maximum data amount to be transmitted at the first estimated transmission cost; and
activate the wireless modem (12) to perform the upcoming data transmission at a time when the first sensed condition occurs by transmitting an amount less than or equal to the predetermined maximum data amount to be transmitted at the first estimated transmission cost.

9. The portable electronic device (10) of claim 2 or 3, wherein when the second estimated transmission cost is less than the first estimated transmission cost, the processor (16) is further configured to:
identify a predetermined maximum data amount to be transmitted at the second estimated transmission cost; and
activate the wireless modem (12) to perform the upcoming data transmission at a time when the predicted second sensed condition occurs by transmitting an amount less than or equal to the predetermined maximum data amount to be transmitted at the second estimated transmission cost.

10. A method performed by a portable electronic device (10), the method comprising:
obtaining (30) sensor data;
creating (31) a learned sensor data pattern based on an historical record of the sensor data obtained over time;
creating (28) a learning function including a cost correlation map in which reference sensor data obtained upon data transmission is correlated with an associated reference transmission cost representing energy consumption of the data transmission;
obtaining (32) at least one first sensor data representing a first sensed condition;
estimating (33), using the learning function for matching the at least one first sensor data with at least one of the reference sensor data in the cost correlation map, a first estimated transmission cost associated with an upcoming data transmission under the first sensed condition;
predicting (34), using the learned sensor data pattern, at least one upcoming second sensor data representing a predicted second sensed condition based on the historical record;
estimating (36) using the learning function a second estimated transmission cost associated with the upcoming data transmission under the predicted second sensed condition; and
comparing (38) the first estimated transmission cost with the second estimated transmission cost for selectively adjusting timing of the upcoming data transmission to optimize the energy consumption within the device based on the associated transmission cost.

11. The method of claim 10, wherein creating the learning function comprises:
performing (20) a plurality of data transmissions, each data transmission comprising:
obtaining (24) at least one reference sensor data while transmitting (22) at least one data unit;
measuring (26) a reference data transmission cost associated with the performance of the at least one data unit transmission; and
creating (21) the cost correlation map in which the at least one reference sensor data obtained in each data transmission is correlated with the associated reference transmission cost.

12. The method of claim 10 or 11, wherein the first estimated transmission cost is less than or equal to the second estimated transmission cost, the method further comprises performing (40) the upcoming data transmission at a time when the first sensed condition occurs.

13. The method of claim 10 or 11, wherein the second estimated transmission cost is less than the first estimated transmission cost, the method further comprises performing (42) the upcoming data transmission at a time when the predicted second sensed condition occurs.

## Patentansprüche

1. Tragbare elektronische Vorrichtung (10), umfassend:
mindestens einen Sensor (14), der konfiguriert ist, um Sensordaten, einschließlich mindestens eines ersten Sensordatenelements, das eine erste erfasste Bedingung darstellt, zu erfassen;
einen Prozessor (16), der konfiguriert ist zum:
Erstellen eines erlerntes Sensordatenmusters basierend auf einer historischen Aufzeichnung des Erfassens der Sensordaten im Laufe der Zeit;
Erstellen einer Lernfunktion, einschließlich einer Kostenkorrelationskarte, in der Referenzsensordaten, die bei einer Datenübertragung erhalten werden, mit zugehörigen Referenzübertragungskosten, die den Energieverbrauch der Datenübertragung darstellen, korreliert werden;
Erhalten des mindestens einen ersten Sensordatenelements, das eine erste erfasste Bedingung darstellt;
Schätzen, unter Verwendung der Lernfunktion zum Abgleichen des mindestens einen ersten Sensordatenelements mit mindestens einem der Referenzsensordaten in der Kostenkorrelationskarte, erster geschätzter Übertragungskosten, die mit einer bevorstehenden Datenübertragung unter der ersten erfassten Bedingung verbunden sind;
Vorhersagen, unter Verwendung des erlernten Sensordatenmusters, mindestens eines bevorstehenden zweiten Sensordatenelements, das eine vorhergesagte zweite erfasste Bedingung basierend auf der historischen Aufzeichnung darstellt;
Schätzen, unter Verwendung der Lernfunktion, zweiter geschätzter Übertragungskosten, die mit der bevorstehenden Datenübertragung unter der vorhergesagten zweiten erfassten Bedingung verbunden sind; und
Vergleichen der ersten geschätzten Übertragungskosten mit den zweiten geschätzten Übertragungskosten zum selektiven Anpassen des Zeitpunkts der bevorstehenden Datenübertragung, um den Energieverbrauch innerhalb der Vorrichtung basierend auf den zugehörigen Übertragungskosten zu optimieren.

2. Tragbare elektronische Vorrichtung (10) nach Anspruch 1, wobei die tragbare elektronische Vorrichtung (10) ferner ein drahtloses Modem (12) umfasst, das konfiguriert ist, um eine Vielzahl von Datenübertragungen durchzuführen, wobei bei jeder der Datenübertragungen mindestens eine Dateneinheit übertragen wird und wobei der Sensor (14) konfiguriert ist, um während jeder der Datenübertragungen mindestens ein Referenzsensordatenelement zu erfassen.

3. Tragbare elektronische Vorrichtung (10) nach Anspruch 2, wobei zum Erstellen der Lernfunktion der Prozessor (16) ferner konfiguriert ist zum:
Erhalten des mindestens einen Referenzsensordatenelements jeder der Datenübertragungen;
Messen von Referenzdatenübertragungskosten, die mit der Durchführung jeder der Datenübertragungen verbunden sind;
Erstellen der Kostenkorrelationskarte, in der das mindestens eine Referenzsensordatenelement, das bei jeder der Datenübertragungen erhalten wird, mit den zugehörigen Referenzübertragungskosten korreliert wird.

4. Tragbare elektronische Vorrichtung (10) nach Anspruch 2 oder 3, wobei, wenn die ersten geschätzten Übertragungskosten geringer oder gleich den zweiten geschätzten Übertragungskosten sind, der Prozessor (16) ferner konfiguriert ist, um das drahtlose Modem (12) zu aktivieren, um die bevorstehende Datenübertragung zu einem Zeitpunkt durchzuführen, zu dem die erste erfasste Bedingung auftritt.

5. Tragbare elektronische Vorrichtung (10) nach Anspruch 2 oder 3, wobei, wenn die zweiten geschätzten Übertragungskosten geringer sind als die ersten geschätzten Übertragungskosten, der Prozessor (16) ferner konfiguriert ist, um das drahtlose Modem (12) zu aktivieren, um die bevorstehende Datenübertragung zu einem Zeitpunkt durchzuführen, zu dem die vorhergesagte zweite erfasste Bedingung auftritt.

6. Tragbare elektronische Vorrichtung (10) nach Anspruch 2 oder 3, wobei, wenn die ersten geschätzten Übertragungskosten geringer oder gleich den zweiten geschätzten Übertragungskosten sind, der Prozessor (16) ferner konfiguriert ist zum:
Vergleichen der ersten geschätzten Übertragungskosten mit vorbestimmten maximalen Kosten und
Aktivieren des drahtlosen Modems (12), um die bevorstehende Datenübertragung zu einem Zeitpunkt durchzuführen, zu dem die erste erfasste Bedingung auftritt und zu dem die ersten geschätzten Übertragungskosten geringer oder gleich den vorbestimmten maximalen Kosten sind.

7. Tragbare elektronische Vorrichtung (10) nach Anspruch 2 oder 3, wobei, wenn die zweiten geschätzten Übertragungskosten geringer als die ersten geschätzten Übertragungskosten sind, der Prozessor (16) ferner konfiguriert ist zum:
Vergleichen der zweiten geschätzten Übertragungskosten mit vorbestimmten maximalen Kosten und
Aktivieren des drahtlosen Modems (12), um die bevorstehende Datenübertragung zu einem Zeitpunkt durchzuführen, zu dem die vorhergesagte zweite erfasste Bedingung auftritt und zu dem die zweiten geschätzten Übertragungskosten geringer oder gleich den vorbestimmten maximalen Kosten sind.

8. Tragbare elektronische Vorrichtung (10) nach Anspruch 2 oder 3, wobei, wenn die ersten geschätzten Übertragungskosten geringer oder gleich den zweiten geschätzten Übertragungskosten sind, der Prozessor (16) ferner konfiguriert ist zum:
Identifizieren einer vorbestimmten maximalen Datenmenge, die zu den ersten geschätzten Übertragungskosten übertragen werden soll; und
Aktivieren des drahtlosen Modems (12), um die bevorstehende Datenübertragung zu einem Zeitpunkt durchzuführen, zu dem die erste erfasste Bedingung auftritt, indem eine Menge übertragen wird, die geringer oder gleich der vorbestimmten maximalen Datenmenge, die zu den ersten geschätzten Übertragungskosten übertragen werden soll, ist.

9. Tragbare elektronische Vorrichtung (10) nach Anspruch 2 oder 3, wobei, wenn die zweiten geschätzten Übertragungskosten geringer als die ersten geschätzten Übertragungskosten sind, der Prozessor (16) ferner konfiguriert ist zum:
Identifizieren einer vorbestimmten maximalen Datenmenge, die zu den zweiten geschätzten Übertragungskosten übertragen werden soll; und
Aktivieren des drahtlosen Modems (12), um die bevorstehende Datenübertragung zu einem Zeitpunkt durchzuführen, zu dem die vorhergesagte zweite erfasste Bedingung auftritt, indem eine Menge übertragen wird, die geringer oder gleich der vorbestimmten maximalen Datenmenge ist, die zu den zweiten geschätzten Übertragungskosten übertragen werden soll.

10. Verfahren, das durch eine tragbare elektronische Vorrichtung (10) durchgeführt wird, das Verfahren umfassend:
Erhalten (30) von Sensordaten;
Erstellen (31) eines erlernten Sensordatenmusters basierend auf einer historischen Aufzeichnung der im Laufe der Zeit erhaltenen Sensordaten;
Erstellen (28) einer Lernfunktion, einschließlich einer Kostenkorrelationskarte, in der Referenzsensordaten, die bei einer Datenübertragung erhalten werden, mit zugehörigen Referenzübertragungskosten, die den Energieverbrauch der Datenübertragung darstellen, korreliert werden;
Erhalten (32) mindestens eines ersten Sensordatenelements, das eine erste erfasste Bedingung darstellt;
Schätzen (33), unter Verwendung der Lernfunktion zum Abgleichen des mindestens einen ersten Sensordatenelements mit mindestens einem der Referenzsensordatenelemente in der Kostenkorrelationskarte, erster geschätzter Übertragungskosten, die mit einer bevorstehenden Datenübertragung unter der ersten erfassten Bedingung verbunden sind;
Vorhersagen (34), unter Verwendung des erlernten Sensordatenmusters, mindestens eines bevorstehenden zweiten Sensordatenelements, das eine vorhergesagte zweite erfasste Bedingung basierend auf der historischen Aufzeichnung darstellt;
Schätzen (36), unter Verwendung der Lernfunktion, zweiter geschätzter Übertragungskosten, die mit der bevorstehenden Datenübertragung unter der vorhergesagten zweiten erfassten Bedingung verbunden sind; und
Vergleichen (38) der ersten geschätzten Übertragungskosten mit den zweiten geschätzten Übertragungskosten zum selektiven Anpassen des Zeitpunkts der bevorstehenden Datenübertragung, um den Energieverbrauch innerhalb der Vorrichtung basierend auf den zugehörigen Übertragungskosten zu optimieren.

11. Verfahren nach Anspruch 10, wobei das Erstellen der Lernfunktion umfasst:
Durchführen (20) einer Vielzahl von Datenübertragungen, wobei jede Datenübertragung umfasst:
Erhalten (24) mindestens eines Referenzsensordatenelements während eines Übertragens (22) mindestens einer Dateneinheit;
Messen (26) von Referenzdatenübertragungskosten, die mit der Durchführung der mindestens einen Dateneinheitsübertragung verbunden sind; und
Erstellen (21) der Kostenkorrelationskarte, in der das mindestens eine Referenzsensordatenelement, das bei jeder Datenübertragung erhalten wird, mit den zugehörigen Referenzübertragungskosten korreliert wird.

12. Verfahren nach Anspruch 10 oder 11, wobei die ersten geschätzten Übertragungskosten geringer oder gleich den zweiten geschätzten Übertragungskosten sind, wobei das Verfahren ferner ein Durchführen (40) der bevorstehenden Datenübertragung zu einem Zeitpunkt, zu dem die erste erfasste Bedingung auftritt, umfasst.

13. Verfahren nach Anspruch 10 oder 11, wobei die zweiten geschätzten Übertragungskosten geringer als die ersten geschätzten Übertragungskosten sind, wobei das Verfahren ferner ein Durchführen (42) der bevorstehenden Datenübertragung zu einem Zeitpunkt, zu dem die vorhergesagte zweite erfasste Bedingung auftritt, umfasst.

## Revendications

1. Dispositif électronique portable (10) comprenant :
au moins un capteur (14) configuré pour capter des données de capteur, comportant au moins une première donnée de capteur représentant une première condition captée ;
un processeur (16) configuré pour :
créer un modèle appris de données de capteur en fonction d'un dossier historique de captage des données de capteur au fil du temps ;
créer une fonction d'apprentissage comportant une carte de corrélation de coût dans laquelle des données de capteur de référence obtenues lors d'une transmission de données sont corrélées avec un coût de transmission de référence associé représentant une consommation d'énergie de la transmission de données ;
obtenir l'au moins une première donnée de capteur représentant une première condition captée ;
estimer, à l'aide de la fonction d'apprentissage pour mettre en concordance l'au moins une première donnée de capteur avec au moins l'une des données de capteur de référence dans la carte de corrélation de coût, un premier coût de transmission estimé associé à une prochaine transmission de données dans la première condition captée ;
prédire, à l'aide du modèle appris de données de capteur, au moins une prochaine seconde donnée de capteur représentant une seconde condition captée prédite en fonction du dossier historique ;
estimer, à l'aide de la fonction d'apprentissage, un second coût de transmission estimé associé à la prochaine transmission de données dans la seconde condition captée prédite ; et
comparer le premier coût de transmission estimé au second coût de transmission estimé pour l'ajustement sélectif de temporisation de la prochaine transmission de données pour optimiser la consommation d'énergie au sein du dispositif en fonction du coût de transmission associé.

2. Dispositif électronique portable (10) selon la revendication 1, dans lequel le dispositif électronique portable (10) comprend en outre un modem sans fil (12) configuré pour mettre en œuvre une pluralité de transmissions de données, dans lequel au moins une unité de données est transmise dans chacune des transmissions de données et dans lequel le capteur (14) est configuré pour capter au moins une donnée de capteur de référence pendant chacune des transmissions de données.

3. Dispositif électronique portable (10) selon la revendication 2, dans lequel pour créer la fonction d'apprentissage, le processeur (16) est configuré en outre pour :
obtenir l'au moins une donnée de capteur de référence de chacune des transmissions de données ;
mesure un coût de transmission de données de référence associé à la mise en œuvre de chacune des transmissions de données ;
créer la carte de corrélation de coût dans laquelle l'au moins une donnée de capteur de référence obtenue dans chacune des transmissions de données est corrélée avec le coût de transmission de référence associé.

4. Dispositif électronique portable (10) selon la revendication 2 ou 3, dans lequel lorsque le premier coût de transmission estimé est inférieur ou égal au second coût de transmission estimé, le processeur (16) est configuré en outre pour activer le modem sans fil (12) pour mettre en œuvre la prochaine transmission de données à un moment où la première condition captée se produit.

5. Dispositif électronique portable (10) selon la revendication 2 ou 3, dans lequel lorsque le second coût de transmission estimé est inférieur au premier coût de transmission estimé, le processeur (16) est configuré en outre pour activer le modem sans fil (12) pour mettre en œuvre la prochaine transmission de données à un moment où la seconde condition captée prédite se produit.

6. Dispositif électronique portable (10) selon la revendication 2 ou 3, dans lequel lorsque le premier coût de transmission estimé est inférieur ou égal au second coût de transmission estimé, le processeur (16) est configuré en outre pour :
comparer le premier coût de transmission estimé à un coût maximal prédéterminé ; et
activer le modem sans fil (12) pour mettre en œuvre la prochaine transmission de données à un moment où la première condition captée se produit et où le premier coût de transmission estimé est inférieur ou égal au coût maximal prédéterminé.

7. Dispositif électronique portable (10) selon la revendication 2 ou 3, dans lequel lorsque le second coût de transmission estimé est inférieur au premier coût de transmission estimé, le processeur (16) est configuré en outre pour :
comparer le second coût de transmission estimé à un coût maximal prédéterminé ; et
activer le modem sans fil (12) pour mettre en œuvre la prochaine transmission de données à un moment où la seconde condition captée prédite se produit et où le second coût de transmission estimé est inférieur ou égal au coût maximal prédéterminé.

8. Dispositif électronique portable (10) selon la revendication 2 ou 3, dans lequel lorsque le premier coût de transmission estimé est inférieur ou égal au second coût de transmission estimé, le processeur (16) est configuré en outre pour :
identifier une quantité maximale prédéterminée de données à transmettre au premier coût de transmission estimé ; et
activer le modem sans fil (12) pour mettre en œuvre la prochaine transmission de données à un moment où la première condition captée se produit en transmettant une quantité inférieure ou égale à la quantité maximale prédéterminée de données à transmettre au premier coût de transmission estimé.

9. Dispositif électronique portable (10) selon la revendication 2 ou 3, dans lequel lorsque le second coût de transmission estimé est inférieur au premier coût de transmission estimé, le processeur (16) est configuré en outre pour :
identifier une quantité maximale prédéterminée de données à transmettre au second coût de transmission estimé ; et
activer le modem sans fil (12) pour mettre en œuvre la prochaine transmission de données à un moment où la seconde condition captée prédite se produit en transmettant une quantité inférieure ou égale à la quantité maximale prédéterminée de données à transmettre au second coût de transmission estimé.

10. Procédé mis en œuvre par un dispositif électronique portable (10), le procédé comprenant :
l'obtention (30) de données de capteur ;
la création (31) d'un modèle appris de données de capteur en fonction d'un dossier historique des données de capteur obtenues au fil du temps ;
la création (28) d'une fonction d'apprentissage comportant une carte de corrélation de coût dans laquelle des données de capteur de référence obtenues lors d'une transmission de données sont corrélées avec un coût de transmission de référence associé représentant une consommation d'énergie de la transmission de données ;
l'obtention (32) d'au moins une première donnée de capteur représentant une première condition captée ;
l'estimation (33), à l'aide de la fonction d'apprentissage pour mettre en concordance l'au moins une première donnée de capteur avec au moins l'une des données de capteur de référence dans la carte de corrélation de coût, d'un premier coût de transmission estimé associé à une prochaine transmission de données dans la première condition captée ;
la prédiction (34), à l'aide du modèle appris de données de capteur, d'au moins une prochaine seconde donnée de capteur représentant une seconde condition captée prédite en fonction du dossier historique ;
l'estimation (36), à l'aide de la fonction d'apprentissage, d'un second coût de transmission estimé associé à la prochaine transmission de données dans la seconde condition captée prédite ; et
la comparaison (38) du premier coût de transmission estimé au second coût de transmission estimé pour l'ajustement sélectif de temporisation de la prochaine transmission de données pour optimiser la consommation d'énergie au sein du dispositif en fonction du coût de transmission associée.

11. Procédé selon la revendication 10, dans lequel la création de la fonction d'apprentissage comprend :
la mise en œuvre (20) d'une pluralité de transmissions de données, chaque transmission de données comprenant :
l'obtention (24) d'au moins une donnée de capteur de référence tout en transmettant (22) au moins une unité de données ;
la mesure (26) d'un coût de transmission de données de référence associé à la mise en œuvre de l'au moins une transmission d'unité de données ; et
la création (21) de la carte de corrélation de coût dans laquelle l'au moins une donnée de capteur de référence obtenue dans chaque transmission de données est corrélée avec le coût de transmission de référence associé.

12. Procédé selon la revendication 10 ou 11, dans lequel le premier coût de transmission estimé est inférieur ou égal au second coût de transmission estimé, le procédé comprend en outre la mise en œuvre (40) de la prochaine transmission de données à un moment où la première condition captée se produit.

13. Procédé selon la revendication 10 ou 11, dans lequel le second coût de transmission estimé est inférieur au premier coût de transmission estimé, le procédé comprend en outre la mise en œuvre (42) de la prochaine transmission de données à un moment où la seconde condition captée prédite se produit.
